# EUROPEAN PATENT SPECIFICATION

(11) **EP 0 498 126 B1**
(45) Date of publication and mention of the grant of the patent: **01.03.1995**
(21) Application number: 91400208.4
(22) Date of filing: 29.01.1991
(51) Int. Cl.: B60R 25/02, B62D 1/18, B60K 28/10

(54) **Steering lock control device for a telescopic steering apparatus**
Lenkverriegelungseinrichtung für eine teleskopartige Lenkvorrichtung
Dispositif de commande de verrouillage de direction pour une direction téléscopique

(43) Date of publication of application: 12.08.1992
(73) Proprietor: VALEO SECURITE HABITACLE, 78290 Croissy-Sur-Seine (FR); INSTITUT MINORU DE RECHERCHE AVANCEE, 06560 Valbonne (FR); AISIN SEIKI KABUSHIKI KAISHA, Kariya City, Aichi-Ken 448 (JP); REGIE NATIONALE DES USINES RENAULT S.A., 92109 Boulogne Billancourt (FR)
(72) Inventor: Thiery, Alain, F 92130 Issy-les-Moulineaux (FR); Ohara, Kohoki, Kariya-shi, Aichi 488 (JP); Laville, Francois, F-78740 Evecquemont (FR); Mitsuta, Tatsumi, F-06560 Valbonne (FR)
(74) Representative: Ernst-Schonberg, Michel

(56) References cited:
- FR-A- 2 414 423
- PATENT ABSTRACTS OF JAPAN vol. 12, no. 137 (M-690) 26 April 1988,& JP-A-62 258860 (AISIN SEIKI) 11 November 1987,
- PATENT ABSTRACTS OF JAPAN vol. 9, no. 313 (M-437)(2036) 10 December 1985,& JP-A-60 148 753 (KOKUSAN KINZOKU) 6 August 1985
- PATENT ABSTRACTS OF JAPAN vol. 13, no. 13 (M-783)(3361) 12 January 1989,& JP-A-63 222941 (SEIREI) 16 September 1988,
- PATENT ABSTRACTS OF JAPAN vol. 1, no. 113 (M-038) 29 September 1977,& JP-A-52 049530 (KUBOTA TEKKO) 20 April 1977,

## Description

The present invention relates to a control device for a telescopic steering apparatus. In particular, it relates to a control device for carrying out sterring lock by utilizing the functions of an electric telescopic steering shaft apparatus.

There has been a steering lock device utilizing the functions of a conventional electric telescopic steering shaft apparatus as set forth in Japanese Unexamined Patent Publication (KOKAI) No. 258860/1987.

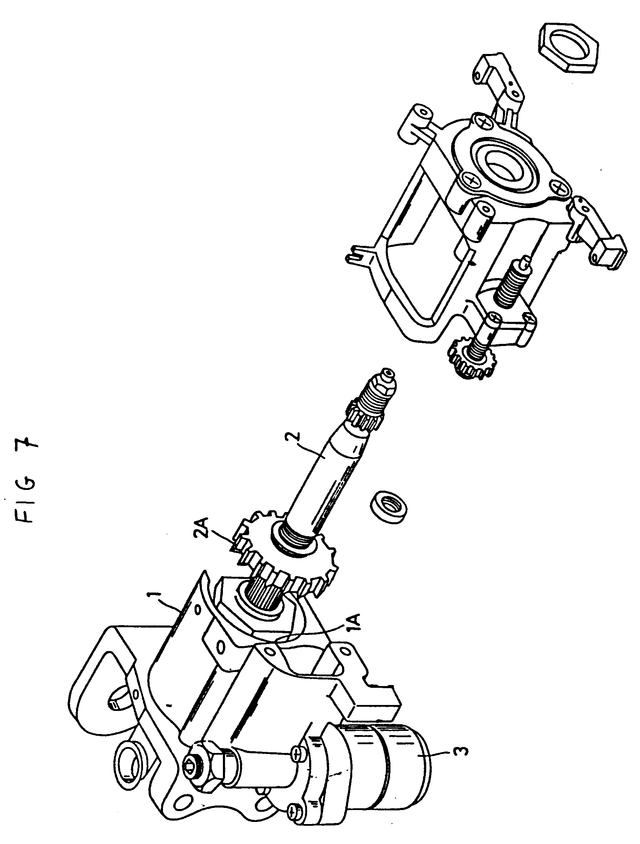

The conventional steering lock device will be hereinafter described with reference to Figure 7.

In a fixed bracket 1 to be fixed on a vehicle body, a steering shaft 2 is held movably in the axial direction thereof and rotatably. At one end of the steering shaft 2, a steering wheel (not shown) is to be fixed. Further, a driving mechanism 3 for moving the steering shaft 2 in the axial direction thereof is fixed on the fixed bracket 1.

A steering lock mechanism comprises an outer serration 2A formed on the outer periphery of the steering shaft 2 and an inner serration 1A formed on the inner periphery of the fixed bracket 1. When the driving mechanism 3 is operated to pull the steering shaft 2 in the fixed bracket 1, the outer serration 2A engages with the inner serration 1A, whereby the steering shaft 1 is made unrotatable with respect to the fixed bracket 1. Accordingly, when the outer serration 2A engages with the inner serration 1A, the steering lock apparatus is in a lock state.

While driving an automobile, for instance when the steering shaft 2 is pulled out from the fixed bracket 1 by operating the driving mechanism 3 in the opposite direction by a manual operation with a key and the like, the outer serration 2A disengages from the the inner serration 1A and the steering shaft 2 becomes rotatable with respect to the fixed bracket 1. Accordingly, when the outer serration 2A disengages from the inner serration 1A, the steering lock apparatus is in an unlock state.

However, in the above-mentioned conventional steering lock apparatus, since the outer serration 2A should be disengaged from the inner serration 1A in order to shift the lock state to the unlock state, it requires a short period of time to shift the lock state to the unlock state.

Therefore, there arises a possibility that an automobile starts travelling due to a failure in the steering lock apparatus, a maloperation of a driver or the like before the lock state has shifted to the unlock state. In the case that an automobile starts travelling before the steering lock apparatus has been turned into the unlock state, the steering lock apparatus is put into the lock state against the intention of a driver. Such a lock state is hardly thought of, but it cannot be said that such a lock state would not happen at all.

It is therefore an engineering assignment to the present invention to eliminate the possibility that a steering lock apparatus is locked against the intention of a driver.

According to the present invention, a steering lock control device comprises a lock mechanism for making a steering wheel of an automobile unrotatable. The lock mechanism cooperates with operating means for starting the automobile, with detection means for detecting an unlock state of the lock mechanism, and with restraining means for making the operating means operable only when the lock mechanism is kept in unlock state.

According to the above-mentioned engineering means, the operating means for starting an automobile can be operated only when the lock mechanism is unlocked and the steering wheel is put into a rotatable state. Therefore, there hardly occurs a situation in which an automobile starts travelling before the lock mechanism has shifted to the unlock state, thereby eliminating the possibility of locking the steering lock apparatus against the intention of a driver.

The present invention will be hereinafter described in detail with reference to a preferred embodiment illustrated in the accompanying drawings.

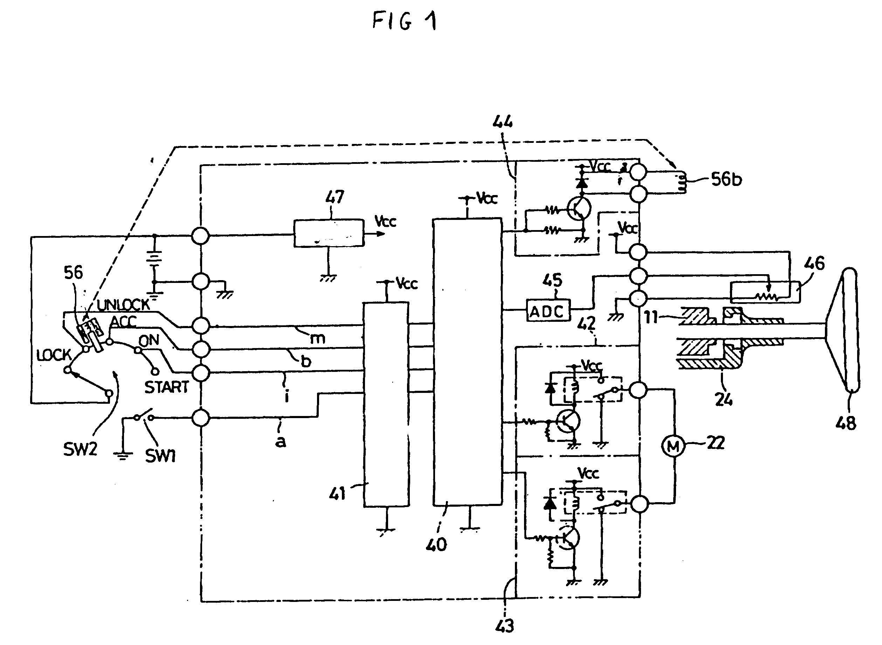

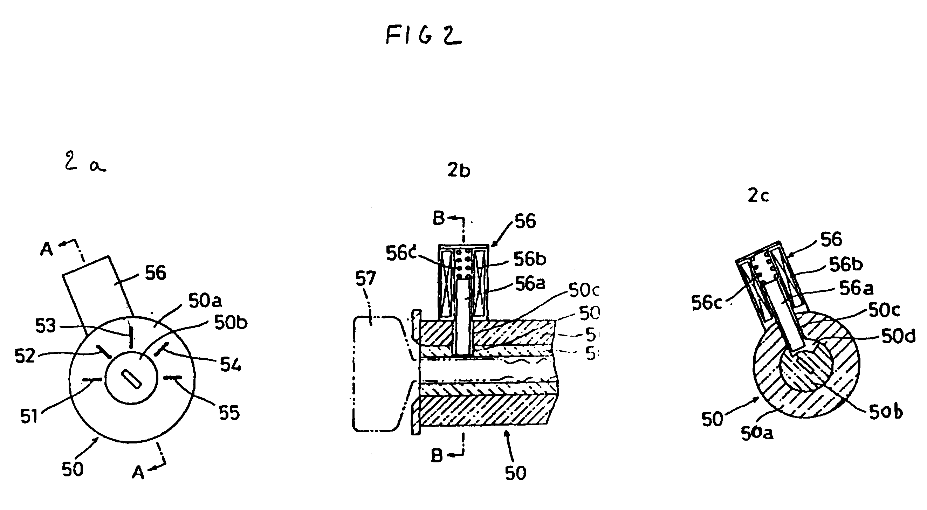

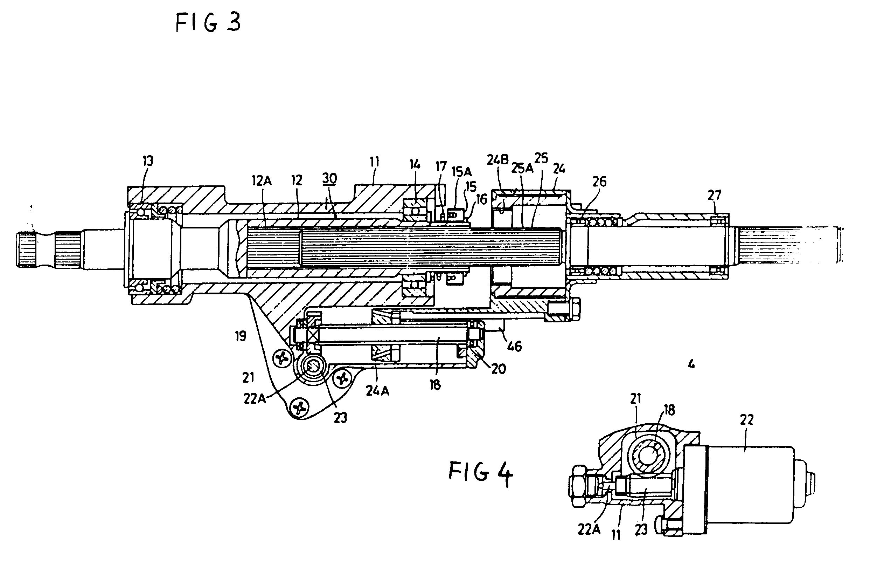

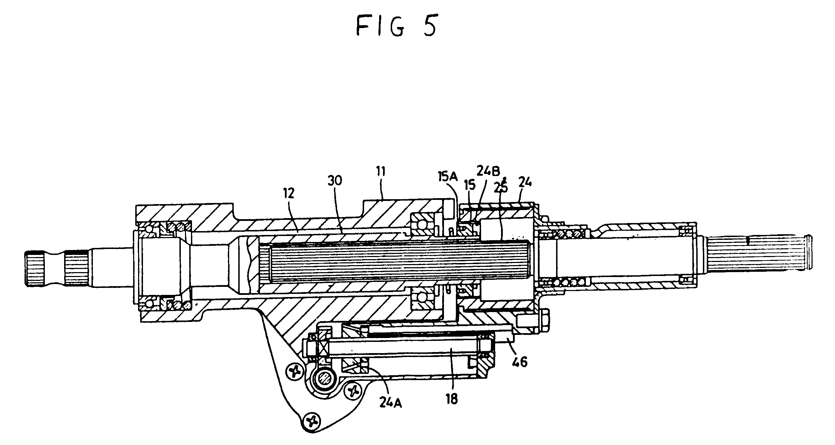

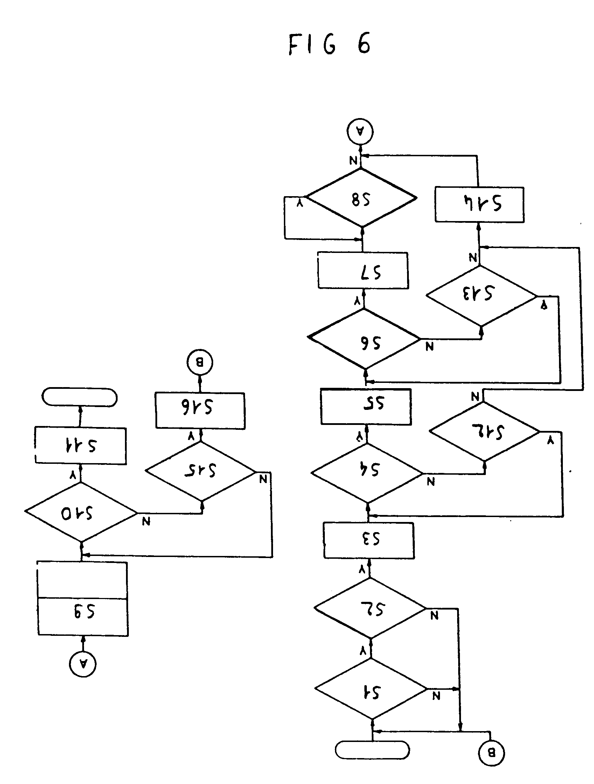

Figure 1 is a block diagram illustrating a preferred embodiment according to the present invention. Figure 2 (a) is a plan view illustrating an ignition key cylinder for an automobile. Figure 2 (b) is a cross sectional view taken along the line A-A in Figure 2 (a). Figure 2 (c) is a cross sectional view taken along the line B-B in Figure 2 (b). Figure 3 is a cross sectional view of a steering lock apparatus in its unlock state. Figure 4 is a partial cross sectional view of a driving mechanism of the steering lock apparatus illustrated in Figure 3. Figure 5 is a cross sectional view of the steering lock apparatus in its lock state. Figure 6 is a flow chart illustrating the operation of a CPU in the preferred embodiment. Figure 7 is a perspective view illustrating a conventional steering lock apparatus.

Figure 3 illustrates a cross sectional view of an example of a steering lock apparatus into which a steering lock control device according to the present invention is incorporated. A fixed bracket 11 is to be fixed on an automobile body (not shown). At both ends of the fixed bracket 11, bearings 13 and 14 are fixed. Into the bearings 13 and 14, a shaft 12 is inserted. The bearings 13 and 14 hold the shaft 12 rotatably but unmovable in the axial direction thereof. The left side end portion of the shaft 12 in the drawing is connected to a rack and pinion mechanism for changing the direction of wheels (not shown).

Further, at the right side end portion of the shaft 12 in the drawing, a lock block 15 is fixed in a manner rotatable together with the shaft 12. On the outer periphery of the lock block 15, an outer serration 15A is formed. The lock block 15 is prevented from coming off by a C-ring 16 fixed on the outermost end portion of the shaft 12. Furthermore, a spring 17 is inserted between the bearing 14 and the lock block 15. The spring 17 urges the lock block 15 in the direction pressing the lock block 15 to the C-ring 16. Here, the lock block 15 may be fixed integrally on the shaft 12. If such is the case, the spring 17 can be got rid of.

Inside the shaft 12, a hollow portion is formed. On the inner periphery of the hollow portion, an inner serration 12A is formed.

On the outer wall portion of the fixed bracket 11, a screw shaft 18 is disposed concentrically with the shaft 12. The screw shaft 18 is held by bearings 19 and 20 rotatably. At the end portion of the screw shaft 18, a worm wheel gear 21 is engaged so as to rotate together with the screw shaft 18. As illustrated in Figure 4, the worm wheel gear 21 is in mesh with a worm gear 23 fixed on a rotary shaft 22A of a motor 22 extending in the direction perpendicular to the screw shaft 18. The rotary shaft 22A is an output shaft of the motor 22 fixed on the outer wall of the fixed bracket 11. Accordingly, the screw shaft 18 is rotated when the motor 22 rotates.

On the right side outer periphery portion of the fixed bracket 11 in the drawing, a movable bracket 24 is inserted into the fixed bracket 11 movably in the direction coaxial with the fixed bracket 11. At the left side end portion of the movable bracket 24 in the drawing, a nut portion 24A is formed. The nut portion 24A is screwed on the screw shaft 18. As the screw shaft 18 rotates, the nut portion 24A moves in the axial direction of the screw shaft 18, thereby advancing and retracting the movable disk 24 in the axial direction of the fixed bracket 11. Further, a position sensor 45 for detecting the position of the movable bracket 24 with respect to the fixed bracket 11 is fixed between the fixed bracket 11 and the movable bracket 24.

Into the hollow portion of the movable bracket 24, a slide shaft 25 is installed and engaged concentrically therewith. The slide shaft 25 is held by bearings 26 and 27 rotatably but unmovable with respect to the movable bracket 24. On the left side outer periphery portion of the slide shaft 25, an outer serration 25A is formed. The left end portion of the slide shaft 25 is inserted into the hollow portion of the shaft 12 from the right end portion of the shaft 12, and the outer serration 25A thereof engages with the inner serration 12A of the shaft 12. By engaging the outer serration 25A of the slide shaft 25 with the inner serration 12A of the shaft 12, the slide shaft 25 is connected to the shaft 12 in a manner slidably with respect to the shaft 12 and in a manner rotatable together with the shaft 12.

Here, at the right side end portion of the slide shaft 25 in the drawing, a steering wheel 48 is fixed. Thus, the slide shaft 25 advances and retracts with respect to the shaft 12, thereby constituting a telescopic steering shaft 30.

On the inner periphery portion of the movable bracket 24, an inner serration 24B is formed, and the diameter thereof is identical with that of the outer serration 15A of the lock block 15. When the movable bracket 24 approaches the most to the fixed bracket 11, the inner serration 24B of the movable bracket 24 comes in mesh with the outer serration 15A of the lock block 15.

Figure 3 illustrates an unlock state, in which the steering wheel 48 is rotatable. When the motor 22 is operated in one direction under the circumstance illustrated in Figure 3 in order to rotate the screw shaft 18 in one direction by way of the worm gear 23 and the worm wheel gear 21, the nut portion 24A moves along the axial direction of the screw shaft 18 in the right direction in the drawing, thereby sliding the slide shaft 25 integrally with the movable bracket 24 in the right direction in the drawing and advancing the telescopic steering shaft 30.

On the other hand, when the motor 22 is operated in the direction opposite to the above-mentioned direction, the screw shaft 18 is rotated in the direction opposite to the above-mentioned direction to move the nut portion 24A along the axial direction of the screw shaft 18 in the left direction in the drawing, thereby sliding the slide shaft 25 together with the movable bracket 24 in the left direction in the drawing and retracting the telescopic steering shaft 30.

In this way, the length of the steering shaft 30 can be adjusted by operating the motor 22 in forward or rearward direction, whereby the length of the steering shaft 30 can be adjusted and the positions of the steering wheel 48 can be adjusted to positions appropriate for physical features of drivers.

Further, when locking the steering wheel 48, the motor 22 is rotated in the rearward direction for retracting the steering shaft 30, the movable bracket 24 is moved toward the fixed bracket 11. As illustrated in Figure 5, when the lock block 15 is inserted into the inside of the movable bracket 24 and the the inner serration 24B and the outer serration 15A are in mesh, the shaft 12 is connected to the movable bracket 24 unrotatably. Consequently, the shaft 12 and the slide shaft 25 are made unrotatable with respect to the movable bracket 24 and the fixed bracket 25, namely with respect to the automobile body.

Furthermore, in the case that shifting the steering wheel 48 from the lock state to the unlock state is desired, the motor 22 is rotated in the forward direction to advance the steering wheel 48, thereby getting the movable bracket 24 away from the fixed bracket 11. Thus, when the inner serration 24B of the movable bracket 24 is disengaged from the outer serration 15A of the lock block 15, the steering wheel 48 is made rotatable.

An electric circuit for controlling the above-mentioned steering lock apparatus will be hereinafter described.

At first, an ignition key cylinder 50 will be described with reference to Figures 2 (a), 2 (b) and 2 (c). As illustrated in Figure 2 (a), the ignition key cylinder 50 comprises a housing 50a and a rotary cylinder 50b. The rotary cylinder 50b can be stopped at the following five positions: a lock position 51, an unlock position 52, an accessory position 53, an ignition-on position 54 and a start position 55.

On the ignition key cylinder 50, an electromagnetic actuator 56 is fixed. The electromagnetic actuutor 56 is disposed between the unlock position 52 and the accessory position 53.

As illustrated in Figure 2 (b), the electromagnetic actuator 56 comprises a plunger 56a, a solenoid 56b and a spring 56c. The plunger 56a is inserted into a concaved portion 50d formed in the rotary cylinder 50b through an opening 50c opened through the housing 50a.

As illustrated in Figure 2 (c), when the plunger 56a is in a state that it is inserted into the concaved portion 50d, the rotary cylinder 50b can be turned only in the range between the lock position 51 and the unlock position 52.

Figure 1 is a block diagram illustrating a circuit arrangement of the steering lock control device according to the present invention to be connected to the above-mentioned steering lock apparatus.

When a key 57 is inserted into the ignition key cylinder 50, a key insert switch SW1 is turned on. While the key insert switch SW1 is turned on, a key insert signal "a" is input into a CPU 40 (a control means) by way of an input processing circuit 41.

Further, when the key 57 inserted into the ignition key cylinder 50 is turned, an unlock signal "m" is output from a cylinder switch SW2, and input into the CPU 40 by way of the input processing circuit 41. Thereafter, as the turning angle of the key 57 increases, an accessory signal "b" and an ignition-on signal "i" are output from the cylinder switch SW2 and input into the CPU 40 by way of the input processing circuit 41 in this order.

Into the CPU 40, the positions of the movable bracket 24 detected by the position sensor 46 are input by way of an A/D converter 45. The CPU 40 controls relay circuits 42 and 43, an electromagnetic actuator energizing circuit 44 in accordance with the input signals. Here, a constant voltage is supplied to the CPU 40, the input processing circuit 41, the A/D converter 45 and the like from a constant voltage electric power source circuit 47.

The operation of the CPU 40 will be hereinafter described with reference to Figure 6.

When an electric power source is turned on, the CPU 40 executes the processing starting at step S1. In the beginning, at step S1, the CPU 40 checks the key insert signal "a". When the key 57 is inserted into the ignition key cylinder 50 and when the key input signal "a" is input into the CPU 40, namely when the judgement at step S1 is "YES", the CPU 40 then checks the state of the unlock signal "m" at step S2. When the key 57 is turned and when the unlock signal "m" is input into the CPU 40, namely when the judgement at step S2 is "YES", the CPU 40 outputs a signal to the relay circuit 42 at step S3, thereby advancing the steering shaft 30.

Thereafter, at step S4, the CPU 40 checks whether the steering wheel 48 is put into the unlock state or not in accordance with the positions of the movable bracket 24 detected by the position detection sensor 46. When the steering wheel 48 is put into the unlock state, namely when the judgement at step S4 is "YES", the CPU turns on the electromagnetic actuator 56 at step S5, thereby enabling the ignition key cylinder 50 to turn to the accessory position 53, the ignition-on position 54 and the start position 55.

Then, at step S6, the CPU 40 judges whether the movable bracket 24 reaches a target stoppage position or not in accordance with the positions of the movable bracket 24 detected by the position detection sensor 46. When the movable bracket 24 reaches the target stoppage position, namely when the judgement at step S6 is "YES", the CPU 40 outputs a signal to the relay circuit 42 at step S7, thereby terminating the terminating shaft 30.

Thereafter, at step S8, the CPU 40 judges whether the key insert signal "a" is input or not, and waits until the key 57 is removed from the ignition key cylinder 50.

Then, at step S9, in the case that the key 57 is removed from the ignition key cylinder 50, the CPU 40 outputs a signal to the relay circuit 43, thereby retracting the steering shaft 30. And at the same time, the CPU 40 shuts off the electricity application to the electromagnetic actuator 56, thereby enabling the key cylinder 50 to turn only between the range of the lock position 51 and the unlock position 52.

Thereafter, at step S10, the CPU 40 judges whether the movable bracket 24 moves to a position closest to the fixed bracket 11 in accordance with the positions of the movable bracket 24 detected by the position detection sensor 46. When the movable bracket 24 moves to the position closest to the fixed bracket 11, namely when the judgement at step S10 is "YES", the CPU 40 outputs a signal to the relay circuit 43, thereby terminating the steering shaft 30. The processing has been thus completed. As aforementioned, the steering wheel 48 is put into the lock state while the movable bracket 24 is on its approaching way to the fixed bracket 11.

In the case that the key 57 is removed from the ignition key cylinder 50 while the steering shaft 30 is advancing, namely at steps S12 and S13, the CPU 40 outputs a signal to the relay circuit 42 at step S14, thereby terminating the steering shaft 30. Then, the CPU 40 executes the processing set forth in the steps following step S9 and on, thereby retracting the steering shaft 30.

Further, in the case that the key 57 is inserted into the ignition key cylinder 50 while the steering shaft 30 is retracting, namely at step S15, the CPU 40 outputs a signal to the relay circuit 43 at step S16, thereby terminating the steering shaft 30. Then, the processing returns back to step S1, and the CPU 40 resumes the processing starting at step S1.

According to the above-mentioned processing, the ignition key cylinder 50 is not turned to the positions, i.e., the ignition-on position 54 and the start position 55, for starting an automobile to travel. Therefore, an automobile never starts travelling before the steering wheel 48 is shifted to the unlock state, and accordingly the steering wheel 48 is not locked at all against the intention of a driver.

In the steering lock control device of this preferred embodiment, the position sensor 46 is employed in order to detect the positions of the movable bracket 24 with respect to the fixed bracket 11. However, instead of the position sensor 46, two switches may be employed. If such is the case, a first switch is adapted for detecting the shifting of the steering wheel 48 from the locked position and to the unlocked position or vice versa, and a second switch is adapted for detecting a target position of the steering wheel 48.

According to the the present invention, it is possible to operate the operating means for starting an automobile only under the circumstance that the lock mechanism is unlocked and the steering wheel is made rotatable. Therefore, there hardly occurs that an automobile starts travelling before the lock mechanism is shifted to the unlock state, and accordingly the possibility of locking the steering lock apparatus against the intention of a driver has been eliminated.

## Claims

1. A steering lock control device comprising a lock mechanism (11, 24) for making a steering wheel of an automobile unrotatable, said steering lock control device being characterized in that said lock mechanism (11, 24) cooperates with operating means (50) for starting said automobile, with detection means (46) for detecting an unlock state of said lock mechanism, and with restraining means (56) for making said operating means (50) operable only when said lock mechanism (11, 24) is kept in said unlock state.

## Patentansprüche

1. Steuereinrichtung für eine Verriegelungsvorrichtung, mit einem Verriegelungsmechanismus (11, 24) zur Verriegelung eines Kraftfahrzeug-Lenkrades, dadurch gekennzeichnet, daß der Verriegelungsmechanismus (11, 24) mit einer Betätigungsanordnung (50) zum Starten des Kraftfahrzeuges, mit einer Meßanordnung (46) zur Feststellung des unverriegelten Zustandes des Verriegelungsmechanismus und mit einer Sperranordnung (56) zusammenwirkt, dergestalt, daß die Betätigungsanordnung (50) nur dann betätigbar ist, wenn sich der Verriegelungsmechanismus (11, 24) im unverriegelten Zustand befindet.

## Revendications

1. Dispositif de commande de verrouillage de direction comportant un mécanisme de verrouillage (11, 24) destiné à empêcher le volant de direction d'une automobile de pouvoir tourner, ledit dispositif de commande de verrouillage de direction étant caractérisé en ce que ledit mécanisme de verrouillage (11, 24) coopère avec des moyens d'actionnement (50) destinés à faire démarrer ladite automobile, avec des moyens de détection (46) destinés à détecter un état déverrouillé dudit mécanisme de verrouillage, et avec des moyens de retenue (56) destinés à rendre lesdits moyens d'actionnement (50) actifs uniquement lorsque ledit mécanisme de verrouillage (11, 24) est maintenu dans ledit état déverrouillé.
